# EUROPEAN PATENT APPLICATION

(11) **EP 4 810 309 A1**
(43) Date of publication of application: **23.09.2026**
(21) Application number: 25165169.1
(22) Date of filing: 20.03.2025
(51) Int. Cl.: B60L 53/65, B60L 55/00, B60L 3/12, B60L 53/12, B60L 53/126, B60L 53/30, B60L 53/38, B60L 53/62, B60L 53/66, B60L 53/67, B60L 53/68, B60L 58/12, H02J 50/10, H02J 3/32

(54) **METHODS AND SYSTEMS FOR VEHICLE CHARGING STRATEGIES**

(71) Applicant: WiTricity AI Tech, LLC, Stuart, FL 34997 (US)
(72) Inventor: CASTRO FONSECA, José Pedro, 8955 Oetwil an der Limmat (CH)
(74) Representative: HG Law International LLP

(57) **Abstract**

Apparatus, systems, and methods for determining a wireless charge strategy for an electric vehicle are provided. Such apparatus, systems, and methods provide a wireless charging vehicle assembly connected to the electric vehicle, collect vehicle telemetry data from the electric vehicle using the wireless charging vehicle assembly, communicate the vehicle telemetry data to a vehicle management system, determining by the vehicle management system, from the vehicle telemetry data, the wireless charge strategy for the electric vehicle, and implement the wireless charge strategy to achieve a required state of charge of the electric vehicle.

## Description

### BACKGROUND

This application relates to wireless vehicle charging, and in particular, to determining strategies for charging an electric vehicle at a wireless charging station.

Wireless power transfer (WPT) for charging electric vehicles is described in detail in patents such as U.S. Patents 8,933,594, titled "Wireless energy transfer for vehicles," and 9,561,730, titled "Wireless power transmission in electric vehicles," which are incorporated here by reference in their entirety. More specifically, these patents refer to inductive WPT between a ground-based unit of a wireless charging station and a vehicle-based unit, herein also simply referred to as the ground unit and the vehicle unit, respectively.

Wireless charging systems for electric vehicles typically consist of a ground-based unit installed at a charging station and a vehicle-based unit integrated into the electric vehicle. These systems utilize inductive power transfer to wirelessly transmit energy from the ground unit to the vehicle unit, which then charges the vehicle's battery. This technology eliminates the need for drivers to manually plug in their vehicles, potentially increasing convenience and reducing wear on charging cables and connectors.

However, current wireless charging systems for electric vehicles face several challenges. For example, current wireless charging systems may not benefit from strategies which may optimize the charging process based on individual vehicle needs and usage patterns. Many existing systems simply charge vehicles to full capacity whenever they are connected, which may not always be necessary or efficient.

Current wireless charging systems may also lack the ability to coordinate charging across multiple vehicles in a fleet or parking facility, and may not take into account real-time vehicle telemetry data when determining charging strategies. This may limit their ability to adapt to changing conditions or optimize charging based on factors such as battery health, recent energy consumption, or upcoming trip requirements for vehicles, e.g., belonging to a fleet.

### SUMMARY

A first general aspect includes a method for determining a wireless charge strategy for an electric vehicle, the method comprising providing a wireless charging vehicle assembly connected to the electric vehicle, collecting vehicle telemetry data from the electric vehicle and/or from another electric vehicle, e.g., using the wireless charging vehicle assembly, communicating the vehicle telemetry data to a vehicle management system, determining by the vehicle management system, from the vehicle telemetry data, the wireless charge strategy for the electric vehicle, and implementing the wireless charge strategy to achieve a required state of charge of the electric vehicle.

Optionally, in embodiments of the first general aspect, implementing the wireless charge strategy comprises using the wireless charging vehicle assembly to charge the electric vehicle to the required state of charge.

Optionally, in embodiments of the first general aspect, the wireless charging vehicle assembly processes the vehicle telemetry data before communicating it to the vehicle management system.

Optionally, in embodiments of the first general aspect, determining the wireless charge strategy further comprises determining a required level of charge for the electric vehicle, e.g., based on vehicle telemetry data of another electric vehicle.

Optionally, in embodiments of the first general aspect, determining the wireless charge strategy further comprises selecting at least one of vehicle-to-vehicle, vehicle-to-grid; and/or grid-to-vehicle charging for charging the electric vehicle.

Optionally, in embodiments of the first general aspect, determining the wireless charge strategy further comprises determining a present charge level of the electric vehicle and a present charge level of at least one further electric vehicle, and determining that vehicle-to-vehicle charging can be used based upon the present charge level of the electric vehicle and the at least one further electric vehicle.

Optionally, in embodiments of the first general aspect, the vehicle management system uses a vehicle usage schedule as part of determining the wireless charge strategy.

Optionally, in embodiments of the first general aspect, collecting vehicle telemetry data from the electric vehicle comprises collecting data via a CAN bus of the electric vehicle.

Optionally, in embodiments of the first general aspect, the method further comprises providing at least one sensor as part of the wireless charging vehicle assembly.

Optionally, in embodiments of the first general aspect, the at least one sensor comprises an accelerometer, an occupancy sensor, a gyroscope, and/or an inertial measurement unit and the vehicle telemetry data further includes data from the at least one sensor.

Optionally, in embodiments of the first general aspect, the wireless charging vehicle assembly collects the vehicle telemetry data whilst the electric vehicle is in use and/or is in motion.

Optionally, in embodiments of the first general aspect, the vehicle telemetry data further includes data input by a user, wherein the data input by the user comprises load and/or occupancy data of for the electric vehicle.

Optionally, in embodiments of the first general aspect, the vehicle telemetry data further includes information about the identity of a driver of the electric vehicle.

Optionally, in embodiments of the first general aspect, the method further comprises providing a wireless charging ground assembly, and wherein implementing the wireless charge strategy includes charging the electric vehicle using the ground assembly in combination with the vehicle assembly in accordance with the wireless charge strategy.

Optionally, in embodiments of the first general aspect, determining the wireless charge strategy further includes determining a required time for charging the electric vehicle.

Optionally, in embodiments of the first general aspect, communicating the vehicle telemetry data to the vehicle management system occurs at predetermined intervals.

Optionally, in embodiments of the first general aspect, communicating the vehicle telemetry data to the vehicle management system occurs when the electric vehicle is stationary.

Optionally, in embodiments of the first general aspect, communicating the vehicle telemetry data to the vehicle management system occurs when the electric vehicle is parked.

Optionally, in embodiments of the first general aspect, the method further comprises providing, as part of the vehicle assembly, a display; and wherein the method further comprises displaying, on the display, information about the vehicle telemetry data.

Optionally, in embodiments of the first general aspect, the method further comprises storing, by the vehicle management system, the wireless charge strategy in a database.

Optionally, in embodiments of the first general aspect, the method further comprises retrieving, by the vehicle management system, the wireless charge strategy from the database.

Optionally, in embodiments of the first general aspect, the method further comprises updating, by the vehicle management system, the wireless charge strategy based upon updated vehicle telemetry data.

Optionally, in embodiments of the first general aspect, the database contains multiple wireless charge strategies, and the method further comprises comparing the determined wireless charge strategy against other strategies to find a best fit.

A second general aspect includes a wireless power transfer, WPT, system for electric vehicle charging, the WPT system comprising a wireless charging vehicle assembly connected to an electric vehicle and a vehicle management system, wherein the wireless charging vehicle assembly is configured to collect vehicle telemetry data from the electric vehicle and/or another electric vehicle and to communicate the vehicle telemetry data to the vehicle management system, the vehicle management system is configured to determine, from the vehicle telemetry data, a wireless charge strategy for the electric vehicle and to implement the wireless charge strategy to achieve a required state of charge of the electric vehicle.

A third general aspect includes a vehicle unit for electric vehicle charging, the vehicle unit configured to be connected to an electric vehicle, the vehicle unit further configured to collect vehicle telemetry data from the electric vehicle and/or another electric vehicle, communicate the vehicle telemetry data to a vehicle management system, and receive a wireless charge strategy to achieve a required state of charge for the electric vehicle.

A fourth general aspect includes a ground unit for electric vehicle charging, the ground unit configured to communicate with a vehicle management system and to receive a wireless charge strategy for the electric vehicle from the vehicle management system based on vehicle telemetry data received at the vehicle management system from a vehicle unit connected to the electric vehicle; and implement the wireless charge strategy to achieve a required state of charge for the electric vehicle by charging the electric vehicle.

### BRIEF DESCRIPTION OF THE DRAWINGS

Fig. 1 illustrates an example parking facility with multiple wireless charging stations for use by electric vehicles.
FIG. 2 is a hierarchical block diagram of an example wireless power transfer system for wireless electric vehicle charging.
FIG. 3A shows an example parking space and a parking scenario illustrating a positional relationship between a vehicle and a wireless charging station in a ground-based coordinate system.
FIG. 3B shows an example parking space and a parking scenario illustrating a positional relationship between a wireless charging station and a vehicle in a vehicle-based coordinate system.
FIG. 4 shows a multiple parking space facility providing a plurality of wireless charging stations illustrating an example parking scenario with a vehicle.
FIG. 5 shows a multiple parking space facility including a vehicle management system and illustrating charging scenarios for vehicles.
FIG. 6A shows real-time vehicle telemetry date capture for a vehicle to be charged wirelessly.
FIG. 6B shows cumulative vehicle telemetry data captured for a vehicle to be charged wirelessly.
FIG. 7 shows example wireless charge strategies for three vehicles to be charged wirelessly.
FIG. 8 shows an exemplary display as part of a vehicle assembly of a vehicle.
FIG. 9 shows an exemplary flow diagram for determining a wireless charge strategy for an electric vehicle.

### DETAILED DESCRIPTION

Wireless inductive charging of electric vehicles (EV) may provide numerous benefits such as improved convenience, safety, and reliability. It eliminates cabling that is often impedimental for pedestrians and prone for wear out, vandalism, and pollution. It can preserve urban aesthetics without compromising functionality and provide a suitable solution for autonomous parking. It may increase availability of parked vehicles for vehicle-to-grid (V2G) power transfer e.g., to stabilize the electricity grid as the demand for fluctuating renewable energy increases.

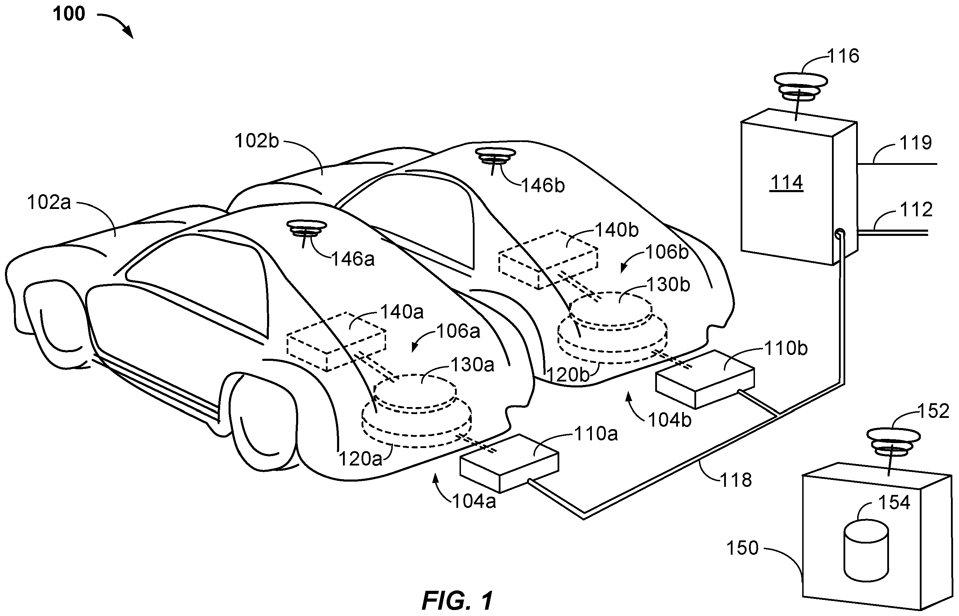

Fig. 1 illustrates an example of a parking facility 100 providing wireless charging services. Two wireless charging-enabled vehicles, 102a, 102b integrating WPT vehicle units 130a, 130b are each parked over a WPT ground unit, 120a, 120b. Both vehicle unit and ground unit include a WPT coil (not shown) sometimes also referred to as an induction coil configured to wirelessly transfer power based on the Faraday induction principle. In some implementations, the ground units are surface mounted on the floor. In other implementations, the ground units are flush mounted with the floor or buried in the ground (e.g., in the asphalt). The power converters 110a, 110b convert power received by WPT vehicle units 130a, 130b to a form suitable for charging the vehicle's traction battery (not shown). In some examples and as described in Patent US 9,561,730, the power converters 140a, 140b may be integrated with power converters used for plug-in charging of the vehicle, commonly called on-board chargers (OBC.), or other on-board vehicle components. The WPT ground units 120a, 120b are shown linked to external power converters 110a, 110b, each connected to a power supply bus 118. In some implementations, the power converters 110a, 110b are configured and mounted as a "wall box". In other implementations, the power converters or parts thereof are integrated into the WPT ground units. The power supply bus 118 is in turn connected to a central power distribution unit 114. In some implementations and operations, the central power distribution unit receives power from a power utility 112 sometimes referred to as "power grid" and provides DC power to the bus 118, and the power converters 110a, 110b are inverters, such as the multi-level inverter described in U.S. Application Publication 2024-0136944, filed October 13, 2023, and incorporated here by reference. The power converters 110a, 110b, provide low-frequency (LF) power signals, such as the 85 kHz signals used for WPT according to the SAE J2954 standard, to the WPT ground units 120a, 120b, to turn into LF magnetic fields for WPT. In other examples, the power distribution unit 114 provides the LF signals directly to each WPT ground unit, and power converters 110a, 110b are simpler or not present. In yet other examples, the power distribution unit 114 and bus 118 are not present, and the power converters 110a, 110b are each connected directly to the power utility 112 and convert AC power from the utility to LF power for wireless power transfer. The combination of a WPT ground unit (e.g., 120a), a power converter (e.g., 110a), and any other ground-side electronics (not shown) constitutes a wireless charging station (e.g., 104a) as indicated in FIG. 1. In some cases, the WPT ground units 120a, 120b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 130a, 130b are sometimes referred to as Vehicle Assembly Resonators (VAR) or vehicle assembly pads and the combination of a WPT vehicle unit (e.g., 130a) and a power converter (e.g., 140a) and any other vehicle-side electronics (not shown) constitutes a Vehicle Assembly (VA) (e.g., 106a, 106b). Each of the power connections shown may be bi-directional, allowing the vehicles to discharge power from their batteries to the power utility 112 in a vehicle-to-grid (V2G), or other load in a vehicle-to-home (V2H), vehicle-to-vehicle (V2V) or similar arrangement (generally V2x).

FIG. 1 also illustrates vehicles 102a, 102b, and power distribution unit 114 providing wireless communication units 146a, 146b, and 116, respectively. The wireless communication unit 116 may be configured to wirelessly communicate with the vehicles 102a and 102b e.g., based on a WiFi IEEE 802.11x standard. In SAE standard conformant wireless charging systems, this communication is used for exchanging data between the GA and VA for purposes of WPT control and safety. Furthermore, the power distribution unit 114 provides an interface 119 configured to communicate with external entities (e.g., a charging operation center) via a communication backhaul (not shown). This backhaul may rely on radio communications (e.g., via communication unit 116), power line communications (e.g., via power utility 112), or any other line communications including fiber optical, or copper cabling. In the example parking facility 100, wireless communication unit 116 is configured to serve multiple vehicles. In other parking facilities, each of the wireless charging stations 104a, 104b provide a wireless communication unit (not shown) configured to communicate with the respective vehicles 102a, 102b.

Beside the WPT coil, the WPT ground units 120a, 120b or the WPT vehicle units 130a, 130b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit.

The WPT vehicle units 130a, 130b may be used, when wireless charging-enabled vehicles 102a, 102b are in operation, to collect vehicle telemetry data from the wireless charging-enabled vehicles 102a, 102b. This data may, for example, include speed data, acceleration data, distance data, charge level data, or similar. This vehicle telemetry data may be stored in WPT vehicle units 130a, 130b.

FIG. 1 also includes a vehicle management system 150 which includes a vehicle management wireless communication unit 152 and a wireless charge strategy store 154. The vehicle management wireless communication unit 152 may be configured to wirelessly communicate with the vehicles 102a and 102b and the central power distribution unit 114 wirelessly, via wireless communication units 116, 146a, 146b, e.g., based on a WiFi IEEE 802.11x standard. In SAE standard conformant wireless charging systems, this communication is used for exchanging data between the GA and VA for purposes of WPT control and safety. The vehicle management system 150 may be configured to receive vehicle telemetry data from wireless charging-enabled vehicles 102a, 102b via vehicle management wireless communication unit 152 and may determine, from the vehicle telemetry data, a wireless charge strategy for one or more of the wireless charging-enabled vehicles 102a, 102b. The wireless charge strategy may be stored in the wireless strategy store 154 and may be retrieved therefrom to be implemented to charge one or more of the wireless charging-enabled vehicles 102a, 102b. The wireless charge strategy may be implemented using one or more of ground units 120a, 120b and one or more vehicle units 130a, 130b.

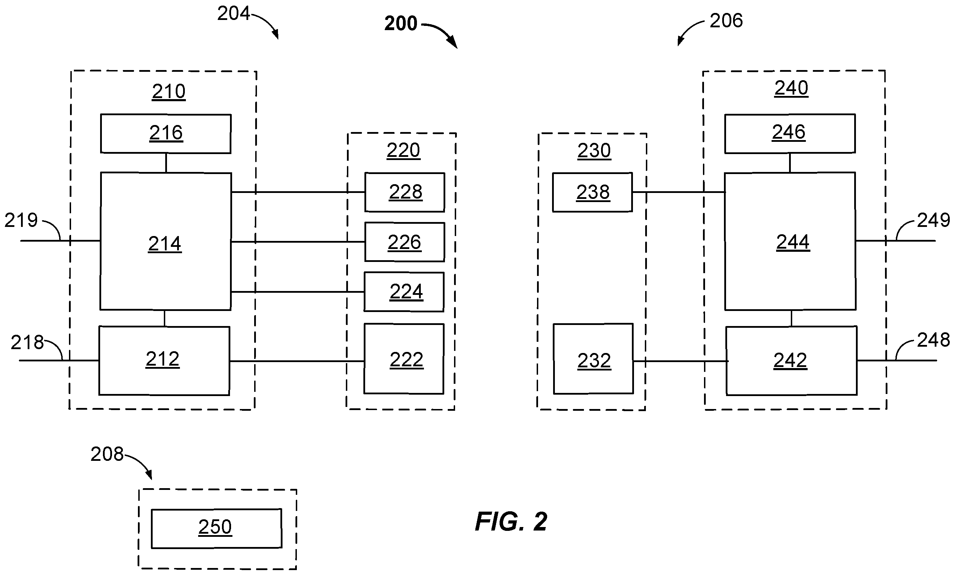

FIG. 2 is a hierarchical block diagram of an example WPT system 200 for wireless electric vehicle charging. At the top hierarchy level, the system 200 comprises a GA 204 and a VA 206 that may refer to the wireless charging station 104a and the VA 106a, respectively, of FIG. 1. The next lower level shows the GA 204 composed of a GA power conversion & control unit 210 and a WPT ground unit 220 (e.g., 120a of FIG. 1) and various connections between these blocks. Splitting the GA into two blocks implies implementations where the GA power conversion & control unit and the ground unit are physically separated (as illustrated in FIG. 1) and interconnected via a several meters long multiwire cable herein referred to as GA feeder cable (not shown). However, it should not exclude implementations where the GA power conversion & control unit is entirely or partially integrated in the ground unit forming one physical unit with a common housing (not shown).

WPT system 200 also includes a vehicle management system 208 which includes a vehicle management processor 250. The vehicle management system may operate in a similar fashion to that described in connection with FIG. 1, i.e. the vehicle management system 208 may be configured to receive vehicle telemetry data from wireless charging-enabled vehicles and may determine, from the vehicle telemetry data, a wireless charge strategy for one or more wireless charging-enabled vehicles. The vehicle management system may also include a wireless strategy store (not shown) and wireless charge strategies may be retrieved therefrom to be implemented to charge one or more wireless charging-enabled vehicles, with the wireless charge strategies being implemented using one or more GAs 204 and VAs 206.

At the third level, the GA power conversion & control unit includes a GA power converter 212 (e.g., 110a of FIG. 1), a GA controller 214, and a GA wireless communication unit 216 (e.g., 132a of FIG. 1). The ground unit 220 integrates a GA WPT coil 222 as well as various functions as needed for Foreign Object Detection (FOD), Living Object Detection (LOD), Vehicle Detection (VD), and Position Detection (PD) as previously discussed with reference to FIG. 1. In the example of FIG. 2, these functions are provided by a FOD unit 224, a LOD unit 226, and a GA PD unit 228, each configured and connected to the GA controller for exchanging data and control. In some implementations such as described in Patent US 11,914,094 and incorporated here by reference, these functions share or partially share one common hardware platform referred to as a multipurpose detection system.

In an implementation conforming with the SAE standard, the GA wireless communication unit 216 is a WiFi Access Point providing an air interface to a Wireless Local Area Network (WLAN) of a parking facility. Certain parking facilities (e.g., parking facility 100 of FIG. 1) provide a central WiFi access point associated to multiple GAs. In such implementations, the GA wireless communication unit 216 is external to the GA 204. In another implementation, the GA wireless communication unit is integral part of the ground unit 220.

The GA WPT coil 222 may include a tuning & impedance matching network (not shown) forming a resonant circuit and the ground-unit is referred to as the GAR as previously mentioned. In other implementations, the tuning & impedance matching network or parts thereof are included in the GA power converter 212. Further, the GA controller 214 interfaces to the GA power converter 212 and the GA wireless communication unit 216 for data exchange and system control. It also provides a data interface 219 (e.g., Ethernet) to communicate with a system external entity e.g., via a backbone network as mentioned with reference to FIG. 1. Moreover, the GA power converter 212 disposes a power interface 218 for feeding or receiving AC or DC power as discussed with reference to FIG. 1.

At the second level, FIG. 2 shows the VA 206 composed of a WPT vehicle unit 230 (e.g., 106a, 106b of FIG. 1) connected to a VA power conversion & control unit 240. At a third level, the VA power conversion & control unit 240 comprises a VA power converter 242 (e.g., 108a of FIG. 1), a VA controller 244, and a VA wireless communication unit 246 (e.g., 132a of FIG. 1). The vehicle unit 230 comprises a VA WPT coil 232 and a VA PD unit 238, the vehicle-side counterpart of the GA PD unit 228 interfacing with the VA controller for data exchange and control. Splitting the VA into two blocks implies implementations where the VA power conversion & control unit and the vehicle unit are physically separated (as illustrated in FIG. 1) and interconnected via a multiwire cable herein referred to as VA feeder cable (not shown). However, this should not exclude implementations where the VA power conversion & control unit 240 is entirely or partially integrated in the vehicle unit 230 forming one physical unit with a common housing (not shown).

In a standard-conforming implementation, the VA wireless communication unit 246 is a WiFi Client. As with the GA wireless communication unit, the VA wireless communication unit may be external to the VA 206, e.g., mounted anywhere on the vehicle or parts or it may be partially or fully integrated into the vehicle unit.

In some implementations, the VA WPT coil 232 includes a tuning & impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 249, e.g., a CAN bus interface to communicate with an external vehicle onboard entity. Moreover, the VA power converter disposes a power interface 248 for feeding or receiving DC power as previously discussed with reference to FIG. 1.

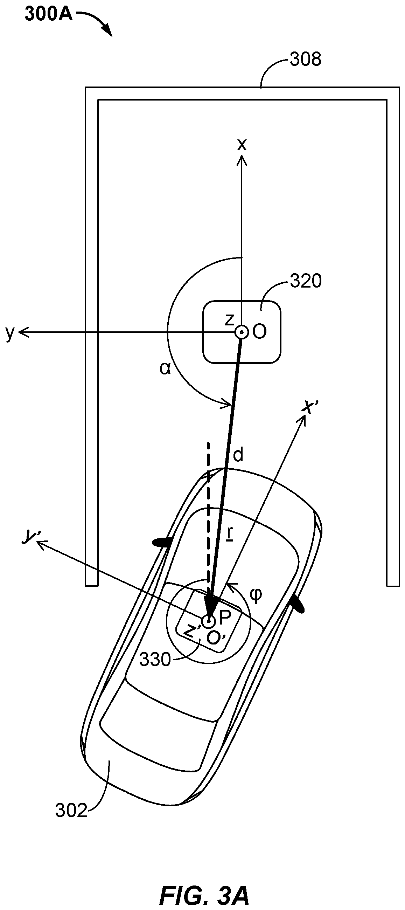

FIG. 3A shows an example parking space and a parking scenario 300A illustrating a positional relationship between a vehicle unit 330 (e.g., 106a of FIG. 1 or 230 of FIG. 2) and a ground unit 320 (e.g., 104a of FIG. 1 or 220 of FIG. 2) as it may be needed for guidance, alignment, and pairing. FIG. 3A represents this positional relationship in a ground-based coordinate system defined by perpendicular x- y-, and z-axes and having its origin O in the ground unit 320. The x- and y-axes (also referred to as the horizontal axes) span a parallel plane to a parking space defined by road markings 308. The z-axis (vertical axis) points towards the zenith assuming a right-hand oriented coordinate system. The x-axis is aligned in parallel to a longitudinal axis of the parking space pointing towards the rear of the parking space.

The vehicle unit 330 mounted on a vehicle 302 may also be associated with a vehicle-based coordinate system defined by perpendicular x'-, y'-, and z'-axes and having its origin O' in the vehicle unit. The x'- and y'-axes span a plane substantially parallel to the parking space, depending on a tilt of the vehicle-unit relative to the floor, while the z'-axis essentially points towards the zenith assuming a right-hand oriented coordinate system. The x'-axis is assumed aligned with a longitudinal axis of the vehicle pointing in driving direction.

The origins O and O' may correspond to a magnetic center point of the ground unit and the vehicle unit, respectively, as explained in U.S. Patent 11,394,253 incorporated here by reference. In some implementations, the vertical coordinate (e.g., z or z') is omitted in a positional relationship as needed for purposes of guidance and alignment. However, it may be used in a process of determining a positional relationship e.g., if a z-height of the vehicle unit 330 matters.

In a ground-based coordinate system omitting z, the positional relationship between the vehicle unit 330 and the ground unit 320 may be defined by the position of the origin O' also denoted P and an angle of rotation φ measured from the dashed line parallel to the x-axis as indicated in FIG. 3A. Using Cartesian coordinates, the position P may be represented by a vector r = (xₚ, yₚ). In a polar representation, P may be defined by a distance d = square root of (xₚ² + yₚ²) and an angle α = arctan (yₚ/xₚ) measured from the x-axis. The angle φ is herein also referred to as the vehicle rotation relative to the parking space. The position P and angle φ are herein also referred to as the pose of the vehicle unit or simply, the pose of the vehicle.

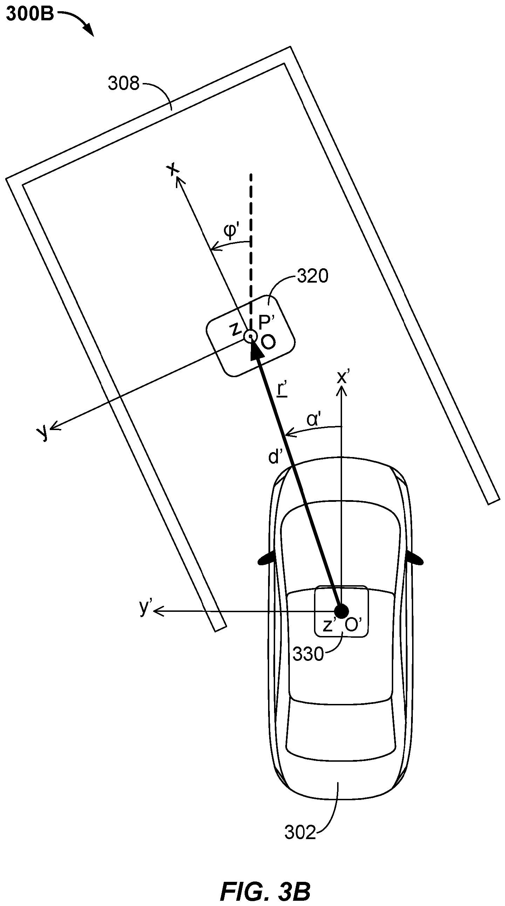

FIG. 3B shows an example parking space and a parking scenario 300B illustrating the same positional relationship between a ground unit 320 (e.g., 104a of FIG. 1) and a vehicle unit 330 (e.g., 106a or 106b of FIG. 1) represented in a vehicle-based coordinate system defined by perpendicular x'- y'-, and z'-axes and having its origin O' as described above with reference to FIG. 3A.

The ground unit 320 is associated with the ground-based coordinate system defined by perpendicular x-, y-, and z-axes and having its origin O in the ground unit and aligned with road markings 308 as described above with reference to FIG. 3A. In the vehicle-based coordinate system omitting z', the positional relationship between the ground unit 320 and the vehicle unit 330 may be defined by the position of the origin O also denoted P' and an angle of rotation φ' measured from the dashed line parallel to the x'-axis as indicated in FIG. 3B. Using Cartesian coordinates, the position P' may be represented by a vector r' = (xₚ', yₚ'). In a polar representation, P' may be defined by a distance d' = square root of (xₚ'² + yₚ'²) and an angle α' = arctan (yₚ'/xₚ') measured from the x-axis. The angle φ' is herein also referred to as the rotation of the ground unit relative to the vehicle. While the distances d' and d are identical, the angles α' and α generally differ. The position P' and angle φ' are herein also referred to as the pose of the ground-unit or simply, the pose of the parking space.

In some implementations of a guidance and alignment system, e.g., using a graphical user interface (GUI) abord the vehicle, the pose of the vehicle unit is represented in a ground-based coordinate system. In other implementations, the pose of the ground unit is displayed in a vehicle-based coordinate system. Various implementations of the vehicle onboard GUI are disclosed in Patent US 10,343,535 incorporated herein as reference. In an example implementation of a guidance and alignment system, the pose of the vehicle unit 330 is determined in a ground-based coordinate system and then mathematically transformed into the pose of the ground-unit 320 as described in Patent US 10,343,537 incorporated herein as reference.

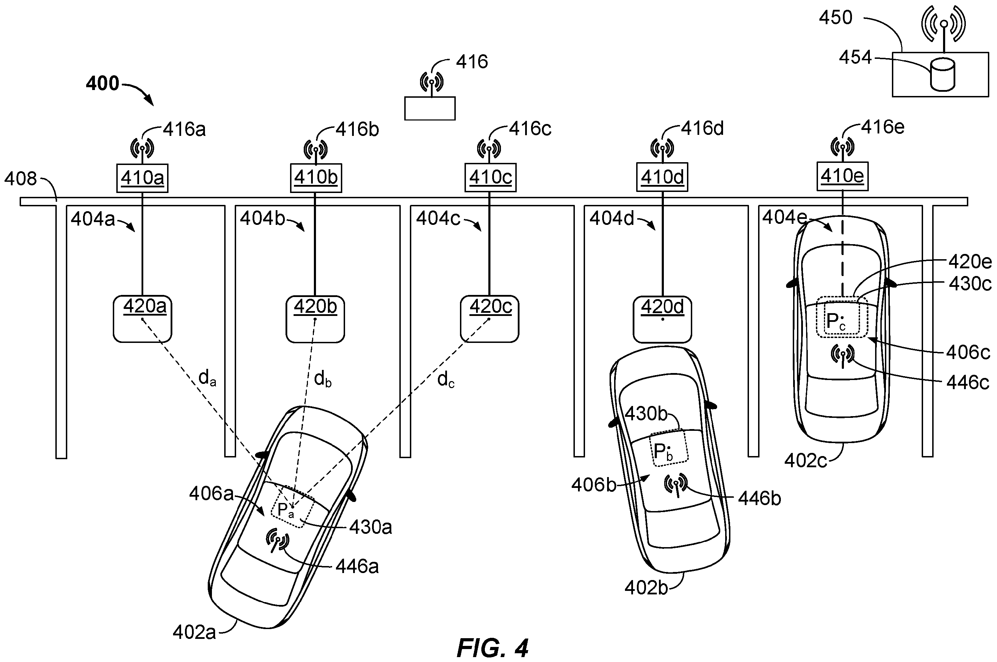

FIG. 4 shows a parking facility 400 illustrating an example multiple parking space scenario with multiple vehicles 402a, 402b, 402c. Parking spaces are outlined by road markings 408. Parking spaces are equipped with wireless charging stations (GAs) referring to GAs 404a, 404b, 404c, 404d, 404e. The plurality of GAs is sometimes also referred to as ground infrastructure. The GAs include respective WPT ground units 420a, 420b, 420c, 420d, 420e suitably positioned in the parking spaces and connected to respective GA power conversion & control units 410a, 410b, 410c, 410d, 410e implemented in some examples as "wall boxes" as described with reference to FIG. 2. Further, each ground unit integrates a GA PD unit (e.g., GA PD unit 228 of FIG. 2, not shown) configured to interact with a vehicle-side counterpart for determining a positional relationship. Moreover, the GAs provide a respective GA wireless communication unit 416a, 416b, 416c, 416d, 416e configured to communicate with vehicles (e.g., 402a, 402b, 402c). FIG. 4 also shows a central GA wireless communication unit 416 (e.g., 116 of FIG. 1) as part of the ground infrastructure connected to each of the GAs (connections not shown). In some implementations, the central communication unit is configured as a communication node of a backbone network (not shown). In other implementations, it is configured to communicate with vehicles (e.g., 402a, 402b, 402c).

FIG. 4 further includes a vehicle management system 450 which may generally correspond to vehicle management systems 150, 250 of FIG. 1 and FIG. 2. The vehicle management system may be a wireless vehicle management system 450, and may be configured to receive vehicle telemetry data from one or more of the vehicles 402a, 402b, 402c. The vehicle management system 450 may further include a processor or processors configured to process the received vehicle telemetry data and to determine one or more wireless charge strategies. The vehicle management system 450 may also be configured to control the wireless charging of one or more of the vehicles 402a, 402b, 402c. The vehicle management system may also include a wireless charge strategy store 454 which may, as described in connection with FIG. 1 above, be used to store determined wireless charge strategies for later retrieval and/or update.

Further, FIG. 4 indicates that the vehicles 402a, 402b, 402c are equipped with VAs 406a, 406b, 406c. The VAs include respective WPT vehicle units 430a, 430b, 430c suitably mounted on the vehicles and connected to respective VA power conversion & control units (e.g., 240 of FIG. 2, not shown) as described with reference to FIG. 2. Further, each vehicle unit integrates a VA PD unit (e.g., VA PD unit 238 of FIG. 2, not shown) configured to interact with the ground-side counterpart for determining the positional relationship. Moreover, the VAs provide a respective VA wireless communication unit 446a, 446b, 446c configured to communicate with any of the GA wireless communication units (e.g., 416a, 416b, 416c, 416d, 416e).

In another aspect, FIG. 4 displays the vehicles 402a and 402b heading towards the ground unit 420b and 420d, respectively, and vehicle 402c parked over the ground unit 420e e.g., for charging. From the perspective of the vehicle 402a, the ground unit 420b is herein also referred to as the target ground unit and the GA 404b as the target GA. From the perspective of the ground unit 420b, the vehicle 402a is also referred to as the vehicle attempting for being charged from. Likewise, the GA 404d and its ground unit 420d are referred to as the target GA and the target ground unit, respectively, of the vehicle 402b, which in turn may also be referred to as the vehicle attempting for being charged from GA 404d.

As mentioned with reference to FIG. 1, standard-compliant WPT for electric vehicles requires wireless communications between a target GA (e.g., GA 404b) and a vehicle (e.g., 402a). In a multiple parking space multiple vehicle scenario such as illustrated in FIG. 4 by example, it is necessary to assure that the VA (e.g., 406a) is actually communicating with the target GA (e.g., 404b), and not another neighboring GA (e.g., 404d). The VA may establish wireless network communications with a GA of an adjacent parking space, falsely determining that it has established communication with its target GA. When the VA requests power and does not receive it (because it is in communication with the wrong GA), the VA may not detect the source of the problem. Likewise, the GA of the adjacent parking space may detect a fault because it is attempting to provide power and recognizing no load. This problem may be referred to as "cross-connect." In addition to the primary function of providing power to a vehicle being impossible in a cross-connect situation, additional functions such as PD for guidance and alignment, FOD, and LOD may not operate properly, if at all, when wireless communications are not established between the VA and its target GA.

As previously mentioned, guidance, alignment, and pairing in the example multiple parking space scenario illustrated in FIG. 4 requires the VA (e.g., VA 406a) to disambiguate between the target GA (e.g., GA 404b) and neighboring GAs (e.g., 404a, 404c, 404d, 404e). Pairing for wireless communications (e.g., via WiFi) additionally requires the VA to disambiguate between the GA wireless communication unit (e.g., 446b) associated to the target GA and the GA wireless communication units associated to neighboring GAs. Alternatively, it requires the GA (e.g., 104b) to disambiguate the vehicle (e.g., 402a), attempting for being charged from other vehicles (e.g., 402a, 402c) as well as the associated VA wireless communication unit (e.g., 446a) from the VA communication units associated to other vehicles.

Moreover, guidance and alignment may require PD to periodically determine a positional relationship between the vehicle unit (e.g., 430a) and the ground unit (e.g., 420b) in a suitable coordinate system, at a suitable update rate as mentioned in U.S. Patent 10,411,524, and over a suitable distance range. In some implementations, guidance starts at a distance of 5 m and positions are determined at a rate of 10 per second. At a distance of 1 m, the update rate may be increased e.g., to 20 per second for alignment.

Various approaches to PD using different means such as quasi-static magnetic near fields (MF), optical, quasi-optical, ultra-wideband (UWB) based on electromagnetic or ultrasonic waves are discussed e.g., in Patents US 10,343,535 and US 10,139,238. While optical, quasi-optical, and ultra-wideband techniques may be impaired by dielectric materials such as water, snow, ice, and dirt, quasi-static magnetic near fields have almost no interaction with these materials. Therefore, the use of quasi-static magnetic near fields can provide a robust and reliable PD solution for indoor and outdoor parking spaces, also suitable for integration in flush-mount or buried ground units. Moreover, using quasi-static magnetic near fields is advantageous as the field strength decays with the third power of distance, thus providing a pronounced distance effect. This is a prerequisite for accurate ranging and disambiguation between the target GA (e.g., 404b) and neighboring GAs (e.g., 404a, 404c, 404d, 404e). This feature also helps to reduce potential interference emanating from the neighboring GAs concurrently generating magnetic fields. In a distance range limited by the parking space boundaries, magnetic fields (MF) alternating with a low frequency (e.g., < 1 MHz) may be considered as quasi-static magnetic near fields.

Methods of pairing using magnetic near fields are disclosed e.g., in Patent US 9,505,314. The underlying principle of pairing is based on comparing (e.g., determining a correlation) between information conveyed by the MF and information transmitted via the wireless communication link (e.g., WiFi). This principle requires the MF being modulated in some form. In some implementations, the MF conveys an identifier (ID) that unambiguously relates to an ID transmitted over the wireless communication link (e.g., via communication units 216 and 246 of FIG. 2). A low frequency (LF) magnetic field used for PD and signaling of information are herein also referred to as a beacon MF.

In some implementations, such as disclosed in Patent US 10,343,535, one or more beacon MFs are generated by the ground-unit, while beacon MF sensing and signal processing is performed in the vehicle unit. Applied to the system of FIG. 2, the GA PD unit 228 and the VA PD unit 238 are configured as a beacon transmitter and a beacon receiver, respectively. This configuration enables PD directly on the vehicle not requiring position data to be communicated to the vehicle as opposed to a reversely transmitting system with the transmitter on the vehicle and the receiver on ground. In a reverse transmitting implementation with the VA PD unit being the beacon transmitter, the position data has to be communicated from the GA to the VA via the wireless communication link. In implementations relying on WiFi, it may occur that a WiFi connection cannot be established in due time, e.g., before the vehicle has approached a distance (e.g., 5 m) where PD is needed for guidance. Moreover, when WiFi frequency channels are highly congested, a WiFi link may be prone to latency and jitter compromising guidance and alignment.

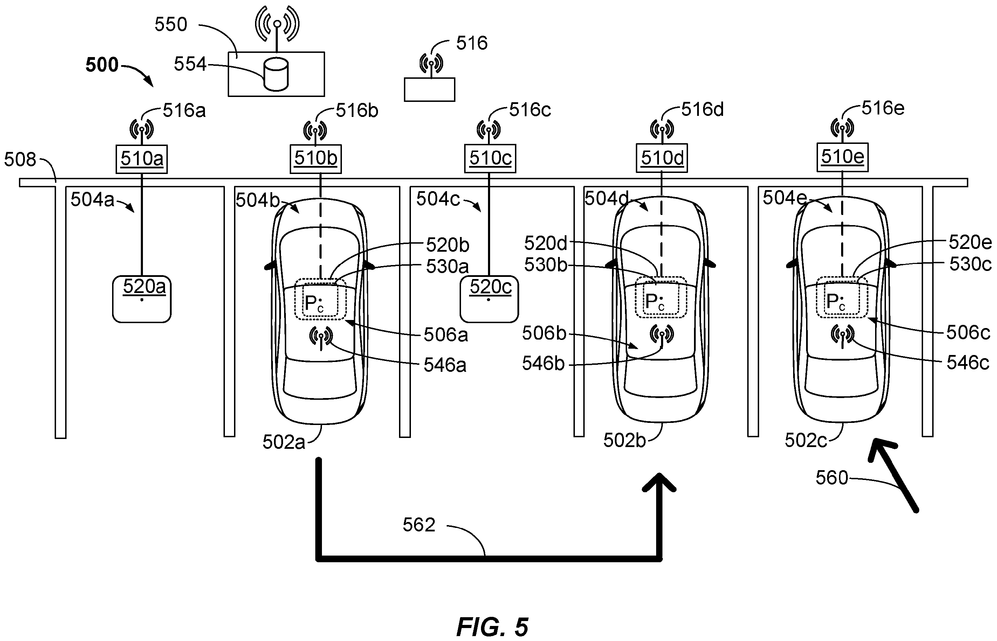

FIG. 5 shows a parking facility 500 similar to parking facility 400 shown in FIG. 4. The parking facility 500 of FIG. 5 shows an illustrative example in which three vehicles 502a, 502b, 502c are parked in parking spaces which are outlined by road markings 508. Each of the parking spaces is equipped with wireless charging stations (GAs) referring to GAs 504a, 504b, 504c, 504d, 504e. The GAs include respective WPT ground units 520a, 520b, 520c, 520d, 520e suitably positioned in the parking spaces and connected to respective GA power conversion & control units 510a, 510b, 510c, 510d, 510e implemented in some examples as "wall boxes" as described with reference to FIGs. 2 and 4. Further, each ground unit integrates a GA PD unit (e.g., GA PD unit 228 of FIG. 2, not shown) configured to interact with a vehicle-side counterpart for determining a positional relationship. Moreover, the GAs provide a respective GA wireless communication unit 516a, 516b, 516c, 516d, 516e configured to communicate with vehicles (e.g., 502a, 502b, 502c). FIG. 5 also shows a central GA wireless communication unit 516 (e.g., 116 of FIG. 1) as part of the ground infrastructure connected to each of the GAs (connections not shown). In some implementations, the central communication unit is configured as a communication node of a backbone network (not shown). In other implementations, it is configured to communicate with vehicles (e.g., 502a, 502b, 502c).

Further, FIG. 5 indicates that the vehicles 502a, 502b, 502c are equipped with VAs 506a, 506b, 506c. The VAs include respective WPT vehicle units 530a, 530b, 530c suitably mounted on the vehicles and connected to respective VA power conversion & control units (e.g., 240 of FIG. 2, not shown) as described with reference to FIG. 2. Further, each vehicle unit integrates a VA PD unit (e.g., VA PD unit 238 of FIG. 2, not shown) configured to interact with the ground-side counterpart for determining the positional relationship. Moreover, the VAs provide a respective VA wireless communication unit 546a, 546b, 546c configured to communicate with any of the GA wireless communication units (e.g., 516a, 516b, 516c, 516d, 516e).

VAs 506a, 506b, 506c may also be connected to or capable of communicating with the CAN bus or similar communication bus of vehicles 502a, 502b, 502c. The VAs 506a, 506b, 506c may be connected to the CAN bus of vehicle 502a, 502b, 502c, and may be hard-wired to the CAN bus or, in some cases, may connect to the CAN bus by way of an OBD connector or similar. Via the CAN bus or otherwise, the VAs 506a, 506b, 506c may collect vehicle telemetry data from vehicles 502a, 502b, 502c and store the vehicle telemetry data for later processing, communication, and/or use. The vehicle telemetry data may include vehicle speed, vehicle position, throttle position, instantaneous power consumption, current state of charge, average power consumption, or any suitable telemetry data which a vehicle may capture and/or make available via the CAN bus thereof. In some examples, telemetry data may be collected from vehicles 502a, 502b, 502c, via an OBD connector, by a device other than the VAs 506a, 506b, 506c.

The VAs 506a, 506b, 506c may also include additional sensors which may for example include an accelerometer, an inertial measurement unit, an altitude sensor, a vehicle occupancy sensor, a gyroscope, and/or pitch, yaw, and/or roll sensors. These additional sensors may, in some examples, provide additional data which may form part of the vehicle telemetry data. The VAs 506a, 506b, 506c may also include processing capability such that the vehicle telemetry data may be processed by the VAs 506a, 506b, 506c. The processing of the vehicle telemetry data may be carried out whilst the vehicle 502a, 502b, 502c is at motion or driving.

FIG. 5 further includes a vehicle management system 550 which may generally correspond to vehicle management systems 150, 250, 450 of FIG. 1, FIG. 2, and FIG. 4. The vehicle management system may be a wireless vehicle management system 550, and may be configured to receive vehicle telemetry data from one or more of the vehicles 502a, 502b, 502c. The VA wireless communication units 546a, 546b, 546c may be configured to communicate wirelessly with the vehicle management system 550. The vehicle telemetry data received by the vehicle management system 550 may be processed by the VAs 506a, 506b, 506c prior to being received by the vehicle management system 550.

As described in connection with FIG. 4, the vehicle management system 550 may further include a processor or processors configured to process the received vehicle telemetry data and to determine one or more wireless charge strategies. The vehicle management system 550 may also be configured to control the wireless charging of one or more of the vehicles 502a, 502b, 502c. The vehicle management system may also include a wireless charge strategy store 554 which may, as described in connection with FIG. 1 above, be used to store determined wireless charge strategies for later retrieval and/or update. The vehicle management system 550 may also implement a determined, retrieved, and/or updated wireless charge strategy to achieve a required state of charge for a vehicle 502a, 502b, 502c.

FIG. 5 also shows a first wireless charge strategy 560 and a second wireless charge strategy 562. These wireless charge strategies 560, 562 may be determined by vehicle management system 550. The first wireless charge strategy is charging of vehicle 502c from the power grid, which may be power utility 112 described above in connection with FIG. 1. The first wireless charge strategy 560 may be determined by vehicle management system 550, which may determine that the appropriate vehicle charge strategy for vehicle 502c may be to charge the vehicle 502c from the power grid based on vehicle telemetry data received from vehicle assembly 506c to achieve a required state of charge of the vehicle 502c.

The second wireless charge strategy 562 also shown in FIG. 5 may also be determined by vehicle management system 550. The second wireless charge strategy is charging vehicle 502b from vehicle 502a, by way of vehicle-to-vehicle charging, with charge stored in vehicle 502a being transferred, via VAs 506a, 506b and WPT ground units 520b and 520d to vehicle 502b. A determination may be made of the present charge level of vehicle 502a and vehicle 502b, and if there is excess charge in vehicle 502a and not sufficient charge in vehicle 502b, charge may be transferred between vehicle 502a and vehicle 502b. In some examples, this may occur if vehicle 502a has, based on vehicle telemetry data received, more charge than is determined as being required, but vehicle 502b has less charge than is determined as being required, and may reduce the need to draw charge from the power grid. In some examples, one or more of vehicles 502a, 502b, 502c may provide charge from the vehicle itself to the grid, via VAs 506a, 506b, 506c and WPT ground units 520b, 520d, 520e if it is determined that all vehicles 502a, 502b, 502c have more charge than is determined as being required, which may also reduce the need to draw charge from the power grid and/or transfer charge between vehicles 502a, 502b, 502c.

VAs 506a, 506b, 506c may include computing capabilities which, as discussed herein, may be used in general for vehicle positioning and charging configuration, but these computing capabilities are, in general, not used when a vehicle is at motion and not charging. It can therefore be said that the added computing capabilities installed on VAs 506a, 506b, 506c may be underutilized, since they are not used during driving. During that time, VAs 506a, 506b, 506c may access the vehicle's CAN bus to collect telemetry data (instantaneous power consumption, battery state and health, speed, acceleration and as set out herein, may use external sensors like IMUs and Gyroscopes for route profile monitoring slope, altitude changes and the like, and this telemetry data may be transferred to a central fleet management system which may, in some examples form part of vehicle management system 550, which may use it to plan the charging schedule or wireless charge strategy for each vehicle. This charging schedule or wireless charge strategy may also be based on a route schedule, driver profile and occupancy and, as described herein, may entail using vehicle-to-vehicle charging from a vehicle which may for example need to take a short route, to a vehicle which may for example need to take a longer route, instead of charging both to 100% from grid energy.

In some examples, the vehicle management system 550 may, as part of determining a wireless charge strategy 560, 562, determine the position, parking space, or wireless charging stations (GAs) 504a, 504b, 504c, 504d, 504e at which a vehicle 502a, 502b, 502c is to be parked. In an example, a vehicle 502a, 502b, 502c may need to be charged immediately and may therefore be instructed to park in a particular parking space and use a particular wireless charging station 504a, 504b, 504c, 504d, 504e to charge. In such an example, the vehicle 502a, 502b, 502c may need to be charged immediately as part of the wireless charge strategy 560, 562 in order to fulfil the charge requirements for the vehicle 502a, 502b, 502c. This may be, for example, because the vehicle 502a, 502b, 502c may require a full charge or may, for example, need to depart soon after it has been parked in order to drive the desired or required route.

In some cases, the position of the vehicle 502a, 502b, 502c determined as part of the wireless charge strategy may be based upon whether vehicle-to-vehicle charging is to be used, for example such as in the second wireless charge strategy 562, to locate vehicles which are being charged vehicle-to-vehicle near to one another.

In some examples, the vehicle management system 550 may, as part of determining a wireless charge strategy 560, 562, determine that a vehicle 502a, 502b, 502c is to be parked in a parking space which is not equipped with a wireless charging station 504a, 504b, 504c, 504d, 504e because other vehicles 502a, 502b, 502c charging needs are greater at that time. The vehicle management system 550 may determine that the vehicle 502a, 502b, 502c should be moved into a parking space equipped with a wireless charging station 504a, 504b, 504c, 504d, 504e at a later time to charge. In some examples, the vehicle management system 550 may, as part of determining a wireless charge strategy 560, 562, determine that a vehicle 502a, 502b, 502c is to be parked in a parking space which is equipped with a wireless charging station 504a, 504b, 504c, 504d, 504e but that the wireless charging station 504a, 504b, 504c, 504d, 504e is not to be activated immediately to charge the vehicle 502a, 502b, 502c because other vehicles 502a, 502b, 502c charging needs are greater at that time, to balance the energy draw from the grid, or for other power management reasons.

In some examples, a per-vehicle, automated fleet charging strategy management which encompasses vehicle-to-grid, grid-to-vehicle, and/or vehicle-to-vehicle charging, and/or a target state-of-charge, optimized with vehicle telemetry data which may include occupancy, route profile, driving profile, and/or a future route schedule, and the leveraging of unused VA computing capabilities during driving.

In some examples, use of a VA for driving telemetry data collection, by leveraging the cost of the VA for a useful purpose, may give rise to cost savings for owners of a vehicle or vehicles which already include VAs since no retrofitting needed in respective vehicles; additional in-car computing capabilities in a wired fleet are in general non-existent.

The vehicles described herein may, for example be drones or unmanned aerial vehicles (UAVs), for example vertical takeoff and landing (VTOL) vehicles.

It can therefore be said that in some examples, the VA computing capabilities may be underused and fleet management systems may not have detailed telemetry information about individual vehicle usage and thus may not be able to automate the charging strategies for vehicles based on internal vehicle driving telemetry data. The VA may capture vehicle telemetry data, and may transfer this data, or a post-processed version of it, to the vehicle management system. This may enable the making of a more informed vehicle autonomy estimate that includes route profile (altitude difference, slope) and make use of vehicle telemetry data. This route profile and the vehicle telemetry data and a route schedule or schedule as inputs, the vehicle management system may devise an optimized charging strategy for each vehicle. Additionally, as described herein, the VA may accept input from a vehicle driver about vehicle occupancy/load, to further improve estimates.

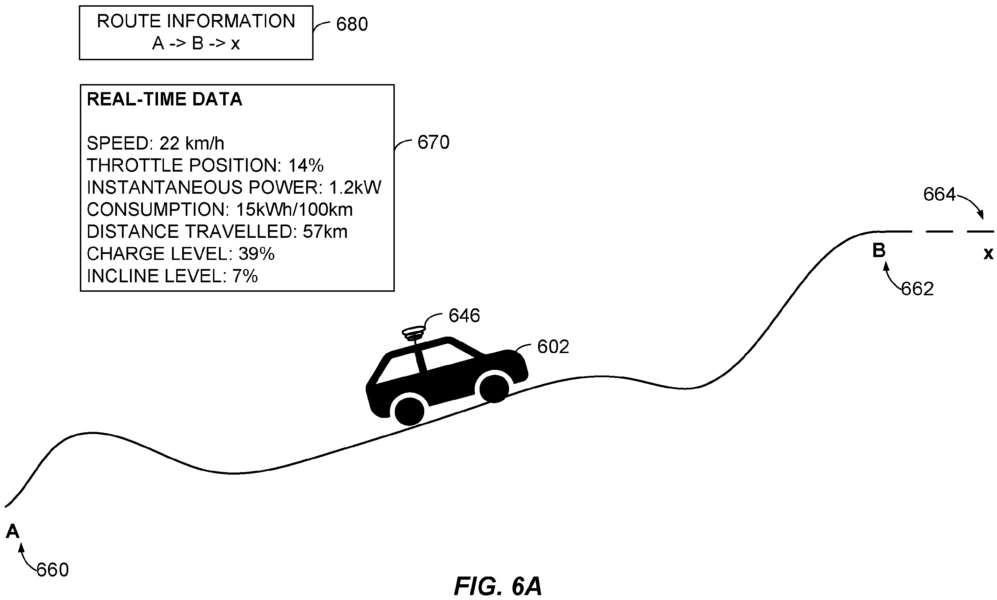

FIG. 6A shows a vehicle 602 on a journey between point A 660 and point B 662. Vehicle 602 includes a wireless communication unit 646 and a VA (not shown) as described herein. The vehicle 602 may, via the CAN bus thereof, provide vehicle telemetry data to the VA. An example of telemetry data 670 is shown in FIG. 6A. Telemetry data 670 includes real-time information about the speed, throttle position, instantaneous power, instantaneous consumption, distance travelled on the trip, the current charge level of the vehicle 602, and the incline level of the vehicle 602. This telemetry data 670 may be stored as part of vehicle telemetry data as described herein by the VA. Route information 680 may also be stored as part of the vehicle telemetry data. In the example shown in FIG. 6A, the end point of the route of the vehicle 602 may be point x 664. The VA of vehicle 602 may, during the journey of the vehicle 602, send real-time information about the vehicle telemetry, for example telemetry data 670, whilst the vehicle is at motion. The communication via wireless communication unit 646 may be cellular, Wi-Fi, or any suitable means of wireless transmission. This data may be sent to a vehicle management system as described herein. The vehicle telemetry data may be processed prior to transmission.

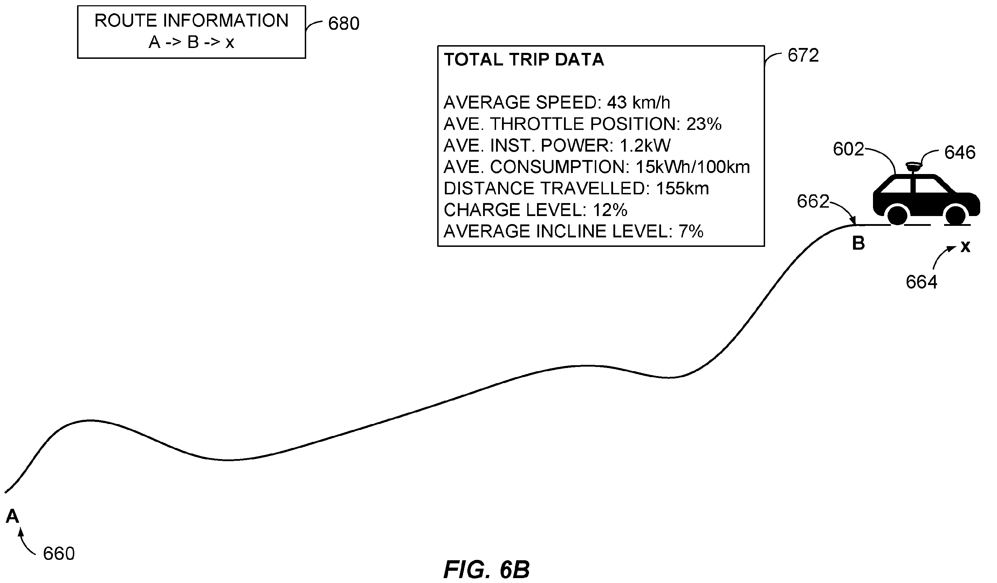

FIG. 6B shows vehicle 602 at the end of a journey, having travelled between point A 660 and point B 662, at point x 664. During the journey, the vehicle 602 may, via the CAN bus thereof, have provided vehicle telemetry data to the VA. Total trip data 672 includes cumulative data about the average speed, average throttle position, average instantaneous power, average consumption, distance travelled on the trip, the current charge level of the vehicle 602, and the average incline level of the vehicle 602. This total trip data 672 may be stored as part of vehicle telemetry data as described herein by the VA. Route information 680 may also be stored as part of the vehicle telemetry data. At the end of the journey, the VA of vehicle 602 may, during the journey of the vehicle 602, send real-time information about the vehicle telemetry, for example telemetry data 670, whilst the vehicle is at motion. The communication via wireless communication unit 646 may be cellular, Wi-Fi, or any suitable means of wireless transmission. This data may be sent to a vehicle management system as described herein. The vehicle telemetry data may be processed prior to transmission.

In some examples, a vehicle 602 may end a journey with a greater charge level than expected or predicted, such that there is more charge stored in the battery of the vehicle 602 that would be expected after the journey taken by the vehicle 602. It is therefore possible that a vehicle 602 ending a journey or set of journeys with more charge than expected may be a source of charge for other vehicles, or indeed may change the determined charging strategy or strategies for charging an electric vehicle 602 or vehicles. A vehicle 602 returning to a charging station with greater charge than expected or planned may communicate this charge level to a vehicle management system as herein, and the vehicle management system may determine that the charge from the vehicle 602 with excess charge may be used to charge other electric vehicles.

For example, a vehicle 602 may return to a charging station with 20% more charge level than expected, and the connected vehicle management system may determine that this 20% excess charge may be used to charge another vehicle instead of charging the vehicle from the grid, i.e. using V2V charging between vehicles instead of G2V charging, reducing the need to draw energy from the grid, instead balancing the level of charge between vehicles.

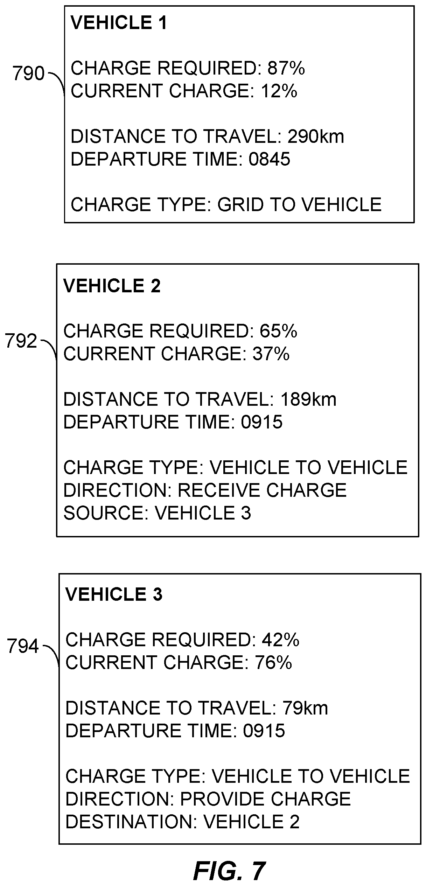

FIG. 7 shows exemplary wireless charge strategies 790, 792, 794 for charging electric vehicles. These exemplary wireless charge strategies 790, 792, 794 may be determined based upon vehicle telemetry data received from VAs of vehicles as described herein by a vehicle management system or systems as described herein. The first wireless charge strategy 790 is for a first vehicle, vehicle 1, and includes a required state of charge for the first vehicle. This required state of charge may be determined, for example, based upon vehicle telemetry data such as that described in connection with FIGs. 6A and 6B. The route to be travelled by vehicle 1 may be 290km, and as a result, the required state of charge of vehicle 1 may be 87%. Vehicle 1 may have a current state of charge of 12% and may therefore require an increase in charge of 75% before the vehicle is to depart at 0845. As a result, the determined charge strategy may be grid-to-vehicle charging as described herein.

The second wireless charge strategy is for a second vehicle, vehicle 2, and includes a required state of charge for the second vehicle. This required state of charge may be determined, for example, based upon vehicle telemetry data such as that described in connection with FIGs. 6A and 6B. The route to be travelled by vehicle 2 may be 189km, and as a result, the required state of charge of vehicle 2 may be 65%. Vehicle 2 may have a current state of charge of 37% and may therefore require an increase in charge of 28% before the vehicle is to depart at 0915. As a result, the determined charge strategy may be vehicle-to-vehicle charging, and the charge may be taken from vehicle 3. The third wireless charge strategy is for a third vehicle, vehicle 3, and includes a required state of charge for the third vehicle. This required state of charge may be determined, for example, based upon vehicle telemetry data such as that described in connection with FIGs. 6A and 6B. The route to be travelled by vehicle 3 may be 79km, and as a result, the required state of charge of vehicle 3 may be 42%. Vehicle 3 may have a current state of charge of 86% and may therefore have excess charge. Vehicle 3 could, therefore, tolerate a decrease of charge by 44% before the vehicle is to depart at 0915, leaving adequate charge for the route to be travelled. As a result, the determined charge strategy may be vehicle-to-vehicle charging, and the charge may be taken from vehicle 3 and transferred, by vehicle-to-vehicle charging, to vehicle 2 as described herein.

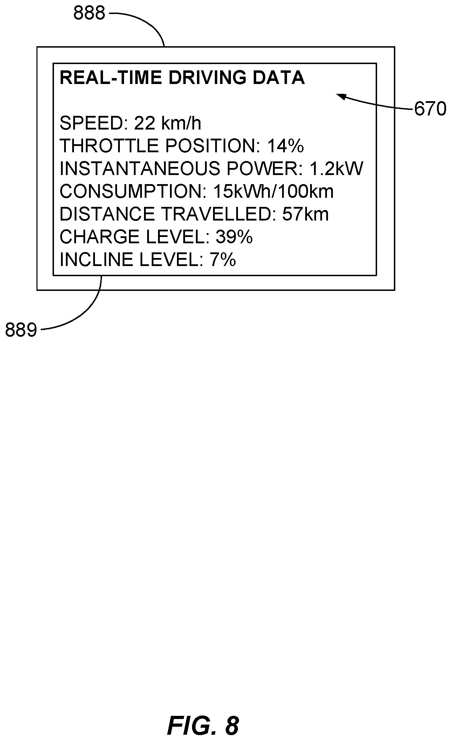

The VAs as described herein may include a display inside the vehicle to which they are connected, which may for example be the graphical user interface (GUI) aboard the vehicle described herein. FIG. 8 shows an exemplary display 888 which may be a telemetry display 889 provided on the display 888 inside the vehicle, which may be real-time telemetry data such as telemetry data 670 shown in FIG. 6A. The display 888 may be switchable, and may for example be configured to display total trip data 672. In some examples, the display 888 may display a charge strategy, for example charge strategies 790, 792, 794 described herein.

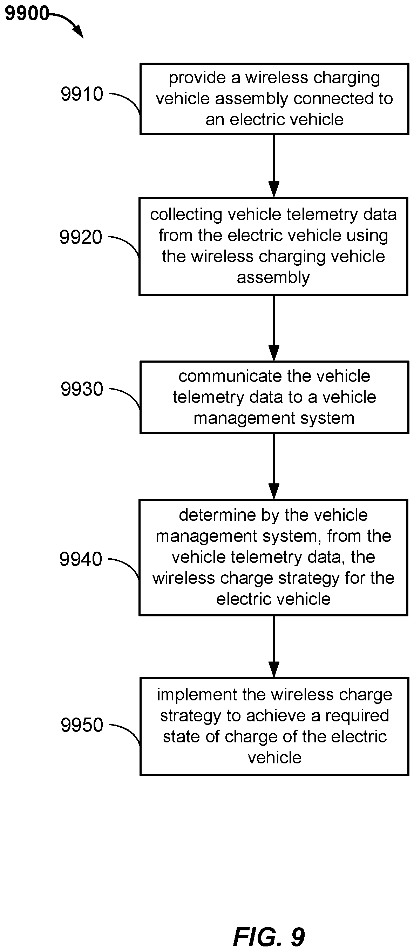

FIG. 9 shows an exemplary flow diagram 9900 for determining a wireless charge strategy for an electric vehicle. At block 9910, a wireless charging vehicle assembly is provided, which may be a WPT VA as described herein, and the wireless charging vehicle assembly is connected to an electric vehicle. The connection between the VA and the electric vehicle may be as described herein. At block 9920, the wireless vehicle charging assembly or VA collects vehicle telemetry data from the electric vehicle. The vehicle telemetry data may be vehicle telemetry data as described herein, and the VA may collect the vehicle telemetry data from the electric vehicle as described herein. In some examples, the vehicle telemetry data may be collected from the electric vehicle via the CAN bus of the electric vehicle by the VA.

At block 9930, the vehicle telemetry data is communicated to a vehicle management system. This communication may occur wirelessly, via cellular data or Wi-Fi, or by any suitable wireless means. The vehicle management system may be a vehicle management system as described herein, and the vehicle telemetry data may be processed by the vehicle assembly before it is communicated to the vehicle management system. The telemetry data may be communicated to the vehicle management system during the time the electric vehicle is charging.

At block 9940, the vehicle management system determines a wireless charge strategy for the electric vehicle. Such a wireless charge strategy may include a method of charging, for example grid-to-vehicle, vehicle-to-vehicle, or vehicle-to-grid, a charge level, a required state of charge, a charge time, and/or other parameters, including the route scheduling, as described herein. At block 9950, the wireless charge strategy is implemented to achieve a required state of charge of the electric vehicle. This wireless charge strategy may be implemented by the vehicle management system, by the central distribution unit, by a ground assembly, a vehicle assembly, the WPT system, either alone or in combination. The required state of charge may be achieved by one or more of grid-to-vehicle, vehicle-to-vehicle, and/or vehicle-to-grid charging and may include bi-directional charging, such that a vehicle may charge or discharge to achieve the required state of charge.

The systems, devices, and processes discussed above are intended to be illustrative and not limiting. One skilled in the art would appreciate that the actions of the processes discussed herein may be omitted, modified, combined, and/or rearranged, and any additional actions may be performed without departing from the scope of the invention. Furthermore, it should be noted that the features and limitations described in any one example may be applied to any other example herein, and flowcharts or examples relating to one example may be combined with any other example in a suitable manner, done in different orders, or done in parallel. In addition, the systems and methods described herein may be performed in real-time. It should also be noted that the systems and/or methods described above may be applied to, or used in accordance with, other systems and/or methods.

All of the features disclosed in this specification (including any accompanying claims, abstract, and drawings), and/or all the steps of any method or process so disclosed, may be combined in any combination, except combinations where at least some of such features and/or steps are mutually exclusive.

Each feature disclosed in this specification (including any accompanying claims, abstract, and drawings), may be replaced by alternative features serving the same, equivalent, or similar purpose unless expressly stated otherwise. Thus, unless expressly stated otherwise, each feature disclosed is one example only of a generic series of equivalent or similar features.

Throughout the description and claims of this specification, the words "comprise" and "contain" and variations of them mean "including but not limited to", and they are not intended to (and do not) exclude other moieties, additives, components, integers, or steps. Throughout the description and claims of this specification, the singular encompasses the plural unless the context otherwise requires. In particular, where the indefinite article is used, the specification is to be understood as contemplating plurality as well as singularity, unless the context requires otherwise.

The reader's attention is directed to all papers and documents which are filed concurrently with or previous to this specification in connection with this application and which are open to public inspection with this specification, and the contents of all such papers and documents are incorporated herein by reference.

## Claims

1. A method for determining a wireless charge strategy for an electric vehicle, the method comprising:
providing a wireless charging vehicle assembly connected to the electric vehicle;
collecting vehicle telemetry data from the electric vehicle using the wireless charging vehicle assembly;
communicating the vehicle telemetry data to a vehicle management system;
determining by the vehicle management system, from the vehicle telemetry data, the wireless charge strategy for the electric vehicle; and
implementing the wireless charge strategy to achieve a required state of charge of the electric vehicle.

2. The method of claim 1, wherein implementing the wireless charge strategy comprises using the wireless charging vehicle assembly to charge the electric vehicle to the required state of charge.

3. The method of claim 1 or claim 2, wherein the wireless charging vehicle assembly processes the vehicle telemetry data before communicating it to the vehicle management system.

4. The method of any one of claims 1-3, wherein determining the wireless charge strategy further comprises determining a required level of charge for the electric vehicle.

5. The method of any preceding claim, wherein determining the wireless charge strategy further comprises:
selecting at least one of vehicle-to-vehicle, vehicle-to-grid; and/or grid-to-vehicle charging for charging the electric vehicle.

6. The method of any preceding claim, wherein determining the wireless charge strategy further comprises:
determining a present charge level of the electric vehicle and a present charge level of at least one further electric vehicle; and
determining that vehicle-to-vehicle charging can be used based upon the present charge level of the electric vehicle and the at least one further electric vehicle.

7. The method of any preceding claim, wherein the vehicle management system uses a vehicle use schedule as part of determining the wireless charge strategy.

8. The method of any preceding claim, wherein collecting vehicle telemetry data from the electric vehicle comprises collecting data via a CAN bus of the electric vehicle.

9. The method of any preceding claim, further comprising providing at least one sensor as part of the wireless charging vehicle assembly, and wherein the at least one sensor comprises an accelerometer, an occupancy sensor, a gyroscope, and/or an inertial measurement unit and the vehicle telemetry data further includes data from the at least one sensor.

10. The method of any preceding claim, wherein the wireless charging vehicle assembly collects the vehicle telemetry data whilst the electric vehicle is in use and/or is in motion.

11. The method of any preceding claim, wherein the method further comprises:
providing a wireless charging ground assembly; and
wherein implementing the wireless charge strategy includes charging the electric vehicle using the ground assembly in combination with the vehicle assembly in accordance with the wireless charge strategy.

12. The method of any one of claims 1-11, wherein communicating the vehicle telemetry data to the vehicle management system when the electric vehicle is parked.

13. A wireless power transfer, WPT, system for electric vehicle charging, the WPT system comprising:
a wireless charging vehicle assembly connected to an electric vehicle and a vehicle management system, wherein:
the wireless charging vehicle assembly is configured to collect vehicle telemetry data from the electric vehicle and to communicate the vehicle telemetry data to the vehicle management system; and
the vehicle management system is configured to determine, from the vehicle telemetry data, a wireless charge strategy for the electric vehicle and to implement the wireless charge strategy to achieve a required state of charge of the electric vehicle.

14. A vehicle unit for electric vehicle charging, the vehicle unit configured to be connected to an electric vehicle, the vehicle unit further configured to:
collect vehicle telemetry data from the electric vehicle;
communicate the vehicle telemetry data to a vehicle management system; and
receive a wireless charge strategy to achieve a required state of charge for the electric vehicle.

15. A ground unit for charging an electric vehicle wherein:
the ground unit is configured to communicate with a vehicle management system and to receive a wireless charge strategy for the electric vehicle from the vehicle management system based on vehicle telemetry data received at the vehicle management system from a vehicle unit connected to the electric vehicle; and
implement the wireless charge strategy to achieve a required state of charge for the electric vehicle by charging the electric vehicle.
